# EUROPEAN PATENT SPECIFICATION

(11) **EP 3 944 555 B1**
(45) Date of publication and mention of the grant of the patent: **06.09.2023**
(21) Application number: 21158357.0
(22) Date of filing: 22.02.2021
(51) Int. Cl.: H04L 9/08

(54) **COMMUNICATION SYSTEM, KEY MANAGEMENT SERVER DEVICE, ROUTER, AND COMPUTER-READABLE MEDIUM**
KOMMUNIKATIONSSYSTEM, SCHLÜSSELVERWALTUNGSSERVERVORRICHTUNG, ROUTER UND COMPUTERLESBARES MEDIUM
SYSTÈME DE COMMUNICATION, DISPOSITIF DE SERVEUR DE GESTION DE CLÉ, ROUTEUR, ET SUPPORT LISIBLE SUR ORDINATEUR

(30) Priority: 22.07.2020 JP 2020125641
(43) Date of publication of application: 26.01.2022
(73) Proprietor: KABUSHIKI KAISHA TOSHIBA, Minato-ku Tokyo 105-0023 (JP)
(72) Inventor: TANAKA, Yasuyuki, Tokyo (JP); TANIZAWA, Yoshimichi, Tokyo (JP)
(74) Representative: Marks & Clerk LLP

(56) References cited:
- CN-A- 108 270 553
- JP-A- 2001 285 274
- JP-A- 2019 161 557
- KUN PENG ET AL: "Klein Bottle Routing: An Alternative to Onion Routing and Mix Network", 1 January 2006 (2006-01-01), INFORMATION SECURITY AND CRYPTOLOGY 4296/2006; ICISC 2006 LECTURE NOTES IN COMPUTER SCIENCE;;LNCS, SPRINGER, BERLIN, DE, PAGE(S) 296 - 309, XP019051333, ISBN: 978-3-540-49112-5 * abstract * * Chapter 4: "Klein Bottle Routing" *

## Description

### FIELD

The present disclosure relates to a communication system, a key management server device, a router, and a computer-readable medium.

### BACKGROUND

Application programming interfaces (APIs) are used in acquiring encryption keys/decryption keys generated by quantum key distribution from key management server devices. When receiving a one-time encrypted packet, a router (or a host) acquires a decryption key from a key management server device by using such an API to decrypt the packet. The API for requesting the decryption key from the key management server device is invoked together with a key identifier embedded in a header of the encrypted packet.

However, in the known devices, the decryption key for decrypting the encrypted packet cannot be acquired from the key management server device until the encrypted packet is received.

JP 2019/161557 relates to a quantum encryption communication system that comprises an encryption unit, a decryption unit, and a control unit. The encryption unit pre-reads an encryption key for encrypting plaintext data from a key provision unit before accepting the plaintext data, and, when the plaintext data is accepted, encrypts the plaintext data using the pre-read encryption key. The decryption unit pre-reads a decryption key for decrypting encrypted data from the key provision unit before accepting the encrypted data, and, when the encrypted data is accepted, decrypts the encrypted data using the pre-read decryption key. The control unit controls an amount of the pre-read encryption key and an amount of the pre-read decryption key

### BRIEF DESCRIPTION OF THE DRAWINGS

FIG. 1 is a diagram illustrating a system configuration example of a communication system of a first arrangement;
FIG. 2 is a diagram illustrating a function configuration example of a router that encrypts a packet of the first arrangement;
FIG. 3 is a diagram illustrating a function configuration example of a router that decrypts a packet of the first arrangement;
FIG. 4 is a diagram illustrating a function configuration example of a key management server device that supplies an encryption key of the first arrangement;
FIG. 5 is a diagram illustrating a function configuration example of a key management server device that supplies a decryption key of the first arrangement;
FIG. 6 is a diagram for explaining an example of a communication method of the first arrangement;
FIG. 7 is a diagram for explaining an example of a system configuration of a communication system and a communication method of a second arrangement;
FIG. 8 is a diagram illustrating a hardware configuration example of the router of the first and second arrangements; and
FIG. 9 is a diagram illustrating a hardware configuration example of the key management server device of the first and second arrangements.

### DETAILED DESCRIPTION

In a first aspect, a communication system is provided as recited in claim 1. In a second aspect, a communication system is provided as recited in claim 8. In a third aspect, a key management server device is provided as recited in claim 9. In a fourth aspect, a computer readable medium is provided as recited in claim 10.

Hereinafter, arrangements of a communication system, a key management server device, a router, and a computer-readable medium will be described in detail with reference to the accompanying drawings.

### First Arrangement

First, a system configuration example of a communication system of a first arrangement will be described.

### System Configuration Example

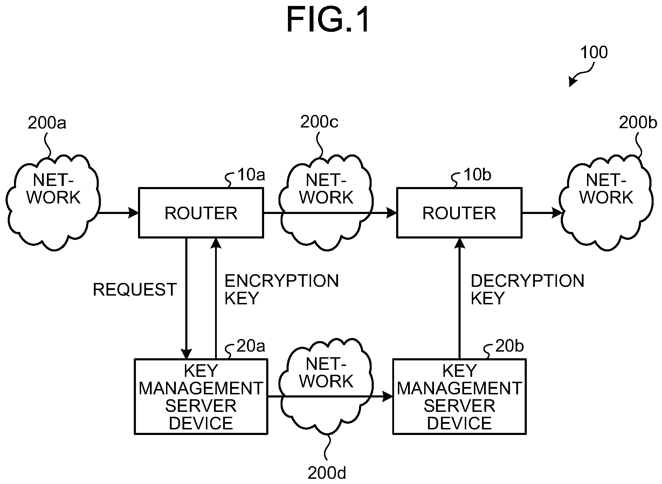

FIG. 1 is a diagram illustrating a system configuration example of a communication system 100 of the first arrangement. The communication system 100 of the first arrangement includes routers 10a and 10b, key management server devices 20a and 20b, and networks 200a to 200d.

The routers 10a and 10b are connected together via the network 200c. The network 200c is, for example, a wide area network such as the Internet. The router 10a is also connected to the network 200a so as to forward a packet received from an external device through the network 200a to the router 10b. The router 10b is also connected to the network 200b so as to forward the packet forwarded from the router 10a to an external device connected to the network 200b.

The router 10a is connected to the key management server device 20a. Similarly, the router 10b is connected to the key management server device 20b. The router 10a requests an encryption key for encrypting the packet to be forwarded to the router 10b from the key management server device 20a to receive the encryption key from the key management server device 20a. Meanwhile, the router 10b receives a decryption key for decrypting the packet received from the router 10a from the key management server device 20b.

Although the first arrangement describes packet encryption and decryption processes, the packet encryption and decryption processes do not necessarily have to be performed. In some applications, the router 10a may attach authentication data to the packet without encrypting the packet, and the router 10b may verify the authentication data attached to the packet forwarded by the router 10a. In any case, the router 10a acquires a key used for encrypting the packet or generating the authentication data to be attached to the packet from the key management server device 20a along with the packet forwarding process. The router 10b acquires a key used for decrypting the packet or verifying the authentication data attached to the packet from the key management server device 20b along with the packet forwarding process.

Note that the router 10a and the key management server device 20a may be mounted in the same housing as one device, or may be mounted as separate devices. Similarly, the router 10b and the key management server device 20b may be mounted in the same housing as one device, or may be mounted as separate devices.

The key management server devices 20a and 20b are connected together via the network 200d. The networks 200c and 200d may be an identical network or different networks. Typically, the key management server devices 20a and 20b are connected to each other via an optical fiber network so as to safely share a bit string with each other by quantum cryptography.

In addition to sharing the bit string, the key management server devices 20a and 20b transmit and receive a control signal (control message) for generating the decryption key corresponding to the encryption key. For example, a key identifier for identifying each key, and a length of key (key length) are adjusted by the control signal. In the following, the key identifier, the length of key (key length) or the like are referred to as key information, and a bit string itself indicating the encryption key or the decryption key as a key value.

Hereinafter, the routers 10a and 10b will be simply referred to as a router 10 when not distinguished from each other. Similarly, the key management server devices 20a and 20b will be simply referred to as a key management server device 20 when not distinguished from each other.

### Function Configuration Example of Packet Encrypting Router

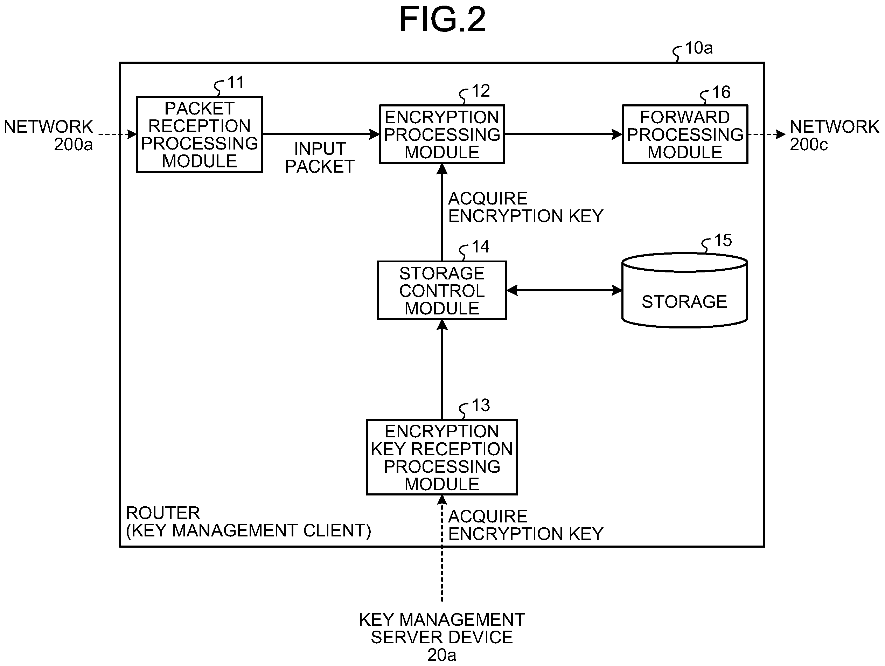

FIG. 2 is a diagram illustrating a function configuration example of the router 10a that encrypts a packet of the first arrangement. The router 10a of the first arrangement includes a packet reception processing module 11, an encryption processing module 12, an encryption key reception processing module 13, a storage control module 14, a storage 15, and a forward processing module 16.

When receiving a packet from the network 200a, the packet reception processing module 11 inputs the packet to the encryption processing module 12.

Meanwhile, when receiving an encryption key from the key management server device 20a, the encryption key reception processing module 13 inputs the encryption key to the storage control module 14.

When receiving the encryption key from the encryption key reception processing module 13, the storage control module 14 stores the encryption key in the storage 15. Additionally, when receiving a request to read the encryption key having a specified key length from the encryption processing module 12, the storage control module 14 reads the encryption key having the specified key length from the storage 15, and inputs the encryption key and the key identifier identifying the encryption key to the encryption processing module 12.

Note that the storage control module 14 may keep acquiring the encryption key from the key management server device 20a via the encryption key reception processing module 13 independently of the operation of the encryption processing module 12. Alternatively, the storage control module 14 may acquire the encryption key from the key management server device 20a via the encryption key reception processing module 13 when instructed by the encryption processing module 12.

The encryption key is acquired, for example, by using a communication protocol such as ETSI GS QKD 014. The encryption key may be also acquired, for example, via a key file generated by the key management server device 20a. Additionally, the encryption key may be acquired, for example, on a shared memory when the router 10a and the key management server device 20a are mounted in the same housing as one device.

When acquiring the encryption key from the storage control module 14, the encryption processing module 12 encrypts the packet and inputs the encrypted packet to the forward processing module 16.

When receiving the encrypted packet from the encryption processing module 12, the forward processing module 16 forwards the packet to the router 10b through the network 200c.

### Function Configuration Example of Packet Decrypting Router

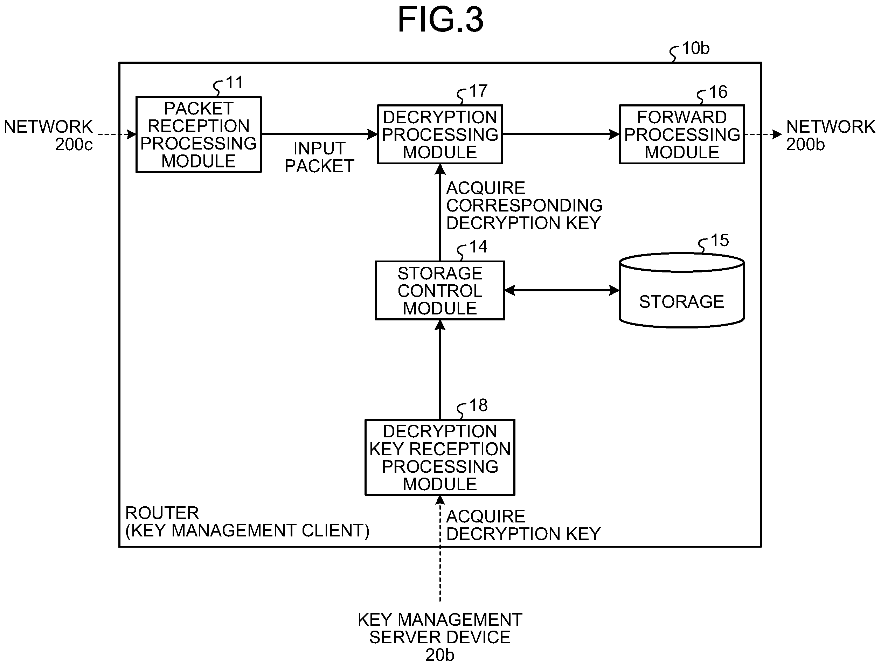

FIG. 3 is a diagram illustrating a function configuration example of the router 10b that decrypts a packet of the first arrangement. The router 10b basically performs a similar operation to that of the router 10a. The routers 10a and 10b differ in processing performed on the packet. While the router 10a performs encryption, the router 10b performs decryption. The router 10b of the first arrangement includes a packet reception processing module 11, a storage control module 14, a storage 15, a forward processing module 16, a decryption processing module 17, and a decryption key reception processing module 18.

When receiving the packet from the network 200c, the packet reception processing module 11 inputs the packet to the decryption processing module 17.

Meanwhile, the decryption key reception processing module 18 acquires a decryption key from the key management server device 20b independently of the packet reception process. When receiving the decryption key from the key management server device 20b, the decryption key reception processing module 18 inputs the decryption key to the storage control module 14.

The decryption key is acquired, for example, by using a communication protocol such as ETSI GS QKD 014. The decryption key may be also acquired, for example, via a key file generated by the key management server device 20b. Additionally, the decryption key may be acquired, for example, on a shared memory when the router 10b and the key management server device 20b are mounted in the same housing as one device.

When receiving the decryption key from the decryption key reception processing module 18, the storage control module 14 stores the decryption key in the storage 15. The storage 15 accumulates a plurality of the decryption keys independently of the packet reception process. When receiving a request to read the decryption key from the decryption processing module 17, the storage control module 14 reads the decryption key from the storage 15, and inputs the decryption key to the decryption processing module 17.

Note that the storage control module 14 keeps acquiring the decryption key from the key management server device 20b via the decryption key reception processing module 18 independently of the operation of the decryption processing module 17. This enables the decryption processing module 17 to decrypt the packet by using the decryption key supplied from the key management server device 20b without requesting the key management server device 20b to generate the decryption key.

The storage control module 14 stores, in the storage 15, the decryption keys in the order that a decryption key generation module 26 of the key management server device 20b generated the decryption keys. The storage control module 14 may read a decryption key specified from the decryption processing module 17, input the specified decryption key to the decryption processing module 17, and delete the decryption key(s) stored in the storage 15 before the specified decryption key is stored.

In decrypting the packet, the decryption processing module 17 extracts identification information (typically, the key identifier) of the decryption key corresponding to the encryption key used for encrypting the packet from header information or the like of the packet, and acquires the decryption key corresponding to the identification information from the storage 15 via the storage control module 14.

When the storage 15 does not have the decryption key corresponding to the encryption key (when the decryption key has not been supplied from the key management server device 20b), the storage control module 14 requests the decryption key from the key management server device 20b via the decryption key reception processing module 18. When the decryption key is inputted from the decryption key reception processing module 18, the storage control module 14 directly inputs the decryption key to the decryption processing module 17 without storing the decryption key in the storage 15. This allows the decryption key to be given to the decryption processing module 17 as quickly as possible, thereby quickly performing the decryption process.

When the decryption key for decrypting the packet has not been supplied from the key management server device 20b at the time of packet decryption, the decryption processing module 17 may wait for a predetermined time and request the storage control module 14 to read the decryption key.

When the decryption key cannot be acquired even after a predetermined number of requests for the storage control module 14 to read the decryption key, the decryption processing module 17 discards the packet without decrypting the packet. Additionally, when the decryption key for decrypting the packet has not been supplied from the key management server device 20b at the time of packet decryption, the decryption processing module 17 may wait for a notification from the storage control module 14 for a predetermined time. When receiving no notification after passage of the predetermined time, the decryption processing module 17 may discard the packet without decrypting the packet.

When acquiring the decryption key from the storage control module 14, the decryption processing module 17 decrypts the packet and inputs the decrypted packet to the forward processing module 16.

When receiving the decrypted packet from the decryption processing module 17, the forward processing module 16 forwards the packet to the external device connected to the network 200b.

### Function Configuration Example of Key Management Server Device for Supplying Encryption Key

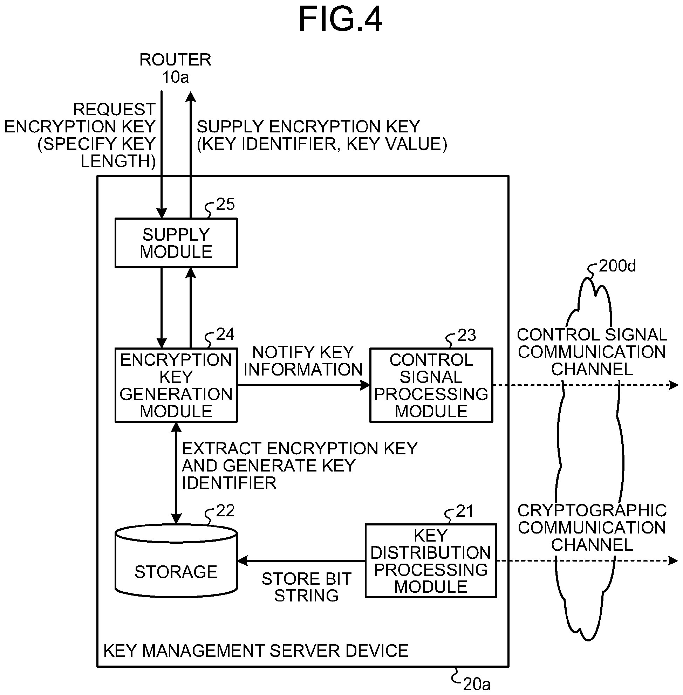

FIG. 4 is a diagram illustrating a function configuration example of the key management server device 20a that supplies an encryption key of the first arrangement. The key management server device 20a of the first arrangement includes a key distribution processing module 21, a storage 22, a control signal processing module 23, an encryption key generation module 24, and a supply module 25.

The key distribution processing module 21 shares a bit string with the key management server device 20b via the network 200d by using quantum key distribution (quantum cryptography). Note that the key distribution processing module 21 may be mounted separately from the key management server device 20a as a quantum key distribution processing device.

The storage 22 accumulates a plurality of the bit strings shared by the key distribution processing module 21.

The control signal processing module 23 transmits the control signal including the key information such as the identification information (typically, the key identifier), the key length, and offset information of the encryption key (the decryption key in the key management server device 20b) to the key management server device 20b that generates the decryption key, in addition to control regarding the sharing of the bit string. The offset information is information indicating where to extract the encryption key (the decryption key) from the shared bit string.

The encryption key generation module 24 generates the encryption key according to a request for the encryption key from the router 10a or autonomously. For example, the key length of the encryption key is specified by the request for the encryption key from the router 10a. Alternatively, for instance, the encryption key generation module 24 autonomously generates the encryption key having a predetermined key length. The encryption key generation module 24 extracts the encryption key having the key length from the bit string to generate the encryption key, and generates the key identifier identifying the encryption key.

The supply module 25 supplies the router 10a with the encryption key generated by the encryption key generation module 24 according to the request for the encryption key from the router 10a or autonomously. The encryption key is supplied to the router 10a using the bit string (key value) indicating the encryption key itself and the key identifier identifying the encryption key.

### Function Configuration Example of Key Management Server Device for Supplying Decryption Key

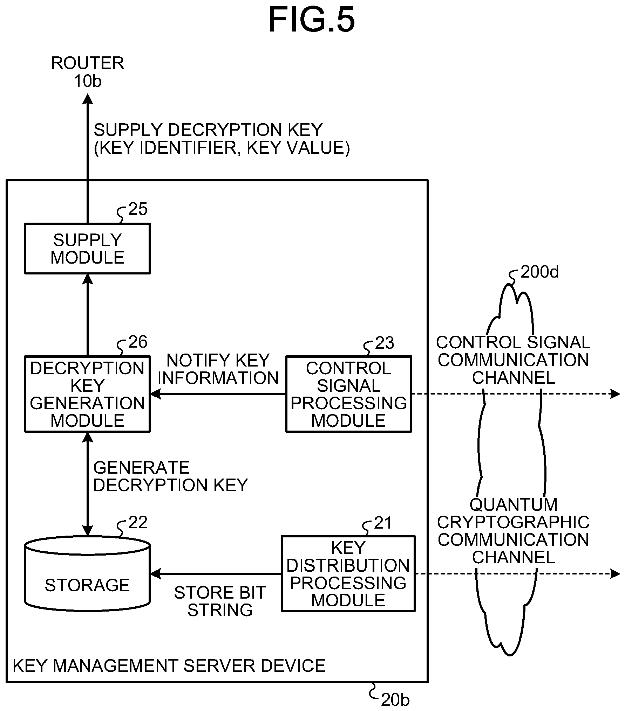

FIG. 5 is a diagram illustrating a function configuration example of the key management server device 20b that supplies a decryption key of the first arrangement. The key management server device 20b of the first arrangement includes a key distribution processing module 21, a storage 22, a control signal processing module 23, a supply module 25, and the decryption key generation module 26.

The key distribution processing module 21 shares the bit string with the key management server device 20a via the network 200d by using quantum key distribution (quantum cryptography). Note that the key distribution processing module 21 may be mounted separately from the key management server device 20b as a quantum key distribution processing device.

The storage 22 accumulates the bit strings shared by the key distribution processing module 21.

The control signal processing module 23 receives the control signal including the key information such as the identification information (typically, the key identifier), the key length, and the offset information of the decryption key (the encryption key in the key management server device 20a) from the key management server device 20a, in addition to control regarding the sharing of the bit string.

Upon receiving the control signal, the decryption key generation module 26 generates the decryption key corresponding to the encryption key from the bit string on the basis of the key identification information and the key length without waiting for a request to generate the decryption key from the router 10b. This allows the decryption key to be acquired more quickly when the router 10b decrypts the packet received from the router 10a. Consequently, the forward throughput/forward speed of the router 10b can be improved. Note that the bit position to extract the decryption key from the shared bit string is specified, for example, by the offset information included in the control signal.

The supply module 25 supplies the decryption key generated by the decryption key generation module 26 to the router 10b.

### Example of Communication Method

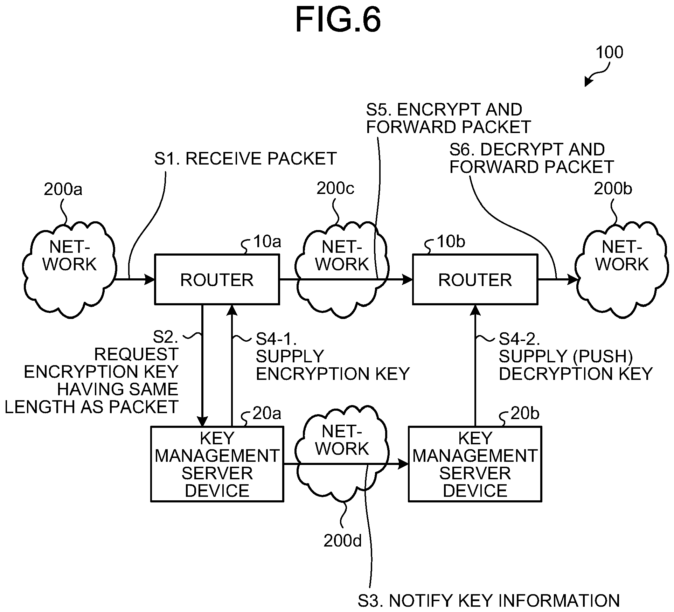

FIG. 6 is a diagram for explaining an example of a communication method of the first arrangement. First, the packet reception processing module 11 of the router 10a receives a packet from the external device connected to the network 200a (step S1). The encryption processing module 12 of the router 10a then transmits a request to generate an encryption key having the same length as the packet received by the process at the step S1 to the key management server device 20a (step S2).

Subsequently, in the key management server device 20a, the encryption key generation module 24 generates the encryption key, and the control signal processing module 23 notifies the key management server device 20b of the key information (the key identification information and the key length) of the generated encryption key (step S3).

The supply module 25 of the key management server device 20a then supplies the encryption key to the router 10a (step S4-1). Meanwhile, in the key management server device 20b, the decryption key generation module 26 generates a decryption key corresponding to the encryption key supplied by the process at the step S4-1 from the bit string shared with the key management server device 20a on the basis of the key identification information and the key length notified at the step S3 without waiting for a request to generate the decryption key from the router 10b. The supply module 25 supplies (pushes) the decryption key to the router 10b (step S4-2) .

Subsequently, the encryption processing module 12 of the router 10a encrypts the packet received by the process at the step S1 by using the encryption key supplied by the process at the step S4-1, and the forward processing module forwards the encrypted packet to the router 10b through the network 200c (step S5).

Subsequently, the packet reception processing module 11 of the router 10b receives the packet forwarded by the process at the step S5. The decryption processing module 17 decrypts the packet by using the decryption key supplied by the process at the step S4-2, and the forward processing module 16 forwards the packet to the external device connected to the network 200b (step S6).

As described above, the communication system 100 of the first arrangement includes the key management server device 20b and the router 10b. In the key management server device 20b, the key distribution processing module 21 shares the bit string by quantum key distribution. The control signal processing module 23 receives the control signal including the key identification information identifying the encryption key generated from the bit string, and the key length indicating the length of the encryption key. Upon receiving the control signal, the decryption key generation module 26 generates the decryption key corresponding to the encryption key from the bit string on the basis of the key identification information and the key length without waiting for the request to generate the decryption key from the router 10b. The supply module 25 supplies the decryption key to the router 10b. In the router 10b, the packet reception processing module 11 receives the packet encrypted with the encryption key. The decryption processing module 17 decrypts the packet by using the decryption key supplied from the key management server device 20b without requesting the key management server device 20b to generate the decryption key.

Consequently, the communication system 100 of the first arrangement enables the decryption key for decrypting the encrypted packet to be acquired from the key management server device 20b without receiving the encrypted packet.

While the case in which the single router 10b is connected to the key management server device 20b is described in the example of FIG. 1, a plurality of the routers 10b may be connected to the key management server device 20b. When the routers 10b are connected to the key management server device 20b, the control signal further includes router identification information identifying the router 10b to be supplied with the decryption key. The router identification information includes, for example, an IP address, a port number, and a host name of each router 10. The supply module 25 supplies the decryption key to the router identified by the router identification information.

### Second Arrangement

Next, a second arrangement will be described. In the second arrangement, a description similar to that of the first arrangement will be omitted, and only different points from those of the first arrangement will be described.

In the second arrangement, a case in which one or more key management server devices 20 exist between the key management server devices 20a and 20b will be described.

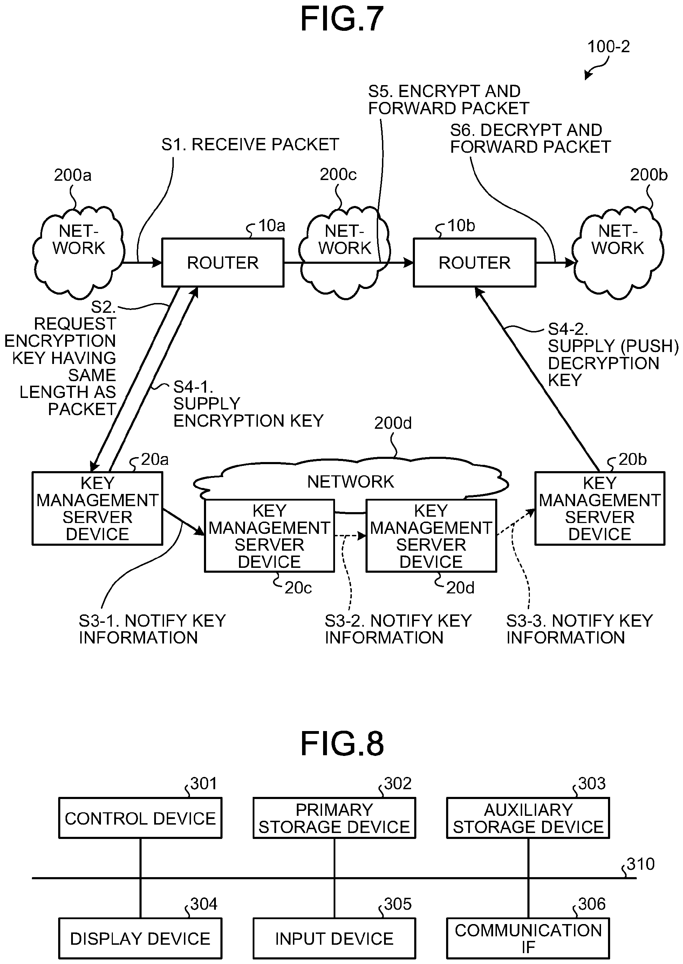

FIG. 7 is a diagram for explaining an example of a system configuration of a communication system 100-2 and a communication method of the second arrangement. In the example of FIG. 7, two key management server devices 20c and 20d are added between the key management server devices 20a and 20b.

In the second arrangement, the key management server device 20a shares the bit string with the key management server device 20c via a quantum cryptographic communication channel. Additionally, the key management server device 20b shares the bit string with the key management server device 20d via a quantum cryptographic communication channel. Thus, the key management server devices 20a and 20b cannot directly share the bit string in the second arrangement.

In the second arrangement, the control signal processing module 23 of the key management server device 20a protects (encrypts) the key information used for decrypting the packet in the router 10b by using the bit string shared with the adjacent key management server device 20c, and transmits the key information to the key management server device 20c. Note that the key information of the second arrangement includes not only the key identification information and the key length but also the key value used for the decryption key. The control signal processing module 23 of the key management server device 20c transmits the key information used for decrypting the packet in the router 10b to the adjacent key management server device 20d in a similar manner. As described above, the key information used for decrypting the packet forwarded by the router 10a is delivered to the key management server device 20b in a bucket brigade manner through the key management server devices 20 (step S3-1 to step S3-3).

The supply module 25 of the key management server device 20a supplies the encryption key to the router 10a (step S4-1). Meanwhile, in the key management server device 20b, the decryption key generation module 26 generates the decryption key by using the key value included in the key information notified by the process at the step S3-3 without waiting for a request to generate the decryption key from the router 10b. The supply module 25 supplies (pushes) the decryption key to the router 10b (step S4-2).

Note that a description on the steps S1, S2, S5, and S6, which is similar to that of the first arrangement (see FIG. 6), is omitted.

The key management server devices 20a and 20c share the bit string in advance by the key distribution processing modules 21. Thus, a portion of the bit string may be extracted and used as the key value of the decryption key used in the router 10b. That is, the key management server device 20a may newly generate the decryption key to be used in the router 10b, protect the decryption key by using the bit string shared with the key management server device 20c, and transmit the decryption key to the key management server device 20c. Alternatively, the key management server device 20a may instruct the key management server device 20c to use a portion of the bit string shared with the key management server device 20c as the key value of the decryption key used in the router 10b.

Moreover, the control signal processing module 23 of the key management server device 20a may directly transmit the key identification information and the key length shared between the key management server devices 20a and 20b to the key management server device 20b. Note that the key identification information and the key length may be encrypted or transmitted in clear text.

When no additional key management server device 20 exists between the key management server devices 20a and 20b, that is, even in a configuration similar to that of the first arrangement in FIG. 1, the key management server device 20a may protect (encrypt) the decryption key to be used in the router 10b by using the bit string shared with the key management server device 20b and transmit the decryption key to the key management server device 20b.

As described above, in the communication system 100-2 of the second arrangement, the key distribution processing module 21 of the key management server device 20a shares the bit string with the facing key management server device 20c by quantum key distribution. The control signal processing module 23 of the key management server device 20a encrypts the decryption key by using the shared bit string, and transmits the control signal including the encrypted decryption key and the key identification information identifying the decryption key to the facing key management server device 20c.

Similarly, the key distribution processing module 21 of the key management server device 20c shares the bit string with the facing key management server device 20d by quantum key distribution. The control signal processing module 23 of the key management server device 20c encrypts the decryption key (the decryption key received from the key management server device 20a) by using the shared bit string, and transmits the control signal including the encrypted decryption key and the key identification information identifying the decryption key to the facing key management server device 20d.

Similarly, the key distribution processing module 21 of the key management server device 20d shares the bit string with the facing key management server device 20b by quantum key distribution. The control signal processing module 23 of the key management server device 20d encrypts the decryption key (the decryption key received from the key management server device 20c) by using the shared bit string, and transmits the control signal including the encrypted decryption key and the key identification information identifying the decryption key to the facing key management server device 20b.

Upon receiving the control signal from the key management server device 20d, the supply module 25 of the key management server device 20b supplies the decryption key to the router 10b without waiting for the request to generate the decryption key from the router 10b.

Meanwhile, in the router 10b, the packet reception processing module 11 receives the packet encrypted with the encryption key corresponding to the decryption key identified by the key identification information. The decryption processing module 17 decrypts the packet by using the decryption key supplied from the key management server device 20b without requesting the key management server device 20b to generate the decryption key.

Consequently, the communication system 100-2 of the second arrangement can provide similar effects to those of the first arrangement even when the bit string cannot be directly shared between the key management server devices 20a and 20b (the communication system 100-2 enables the decryption key for decrypting the encrypted packet to be acquired from the key management server device 20b without receiving the encrypted packet).

Lastly, hardware configuration examples of the router 10 and the key management server device 20 of the first and second arrangements will be described.

### Hardware Configuration Example

FIG. 8 is a diagram illustrating a hardware configuration example of the router 10 of the first and second arrangements. The router 10 includes a control device 301, a primary storage device 302, an auxiliary storage device 303, a display device 304, an input device 305, and a communication interface (IF) 306.

The control device 301, the primary storage device 302, the auxiliary storage device 303, the display device 304, the input device 305, and the communication IF 306 are connected together via a bus 310.

The control device 301 executes a computer program read into the primary storage device 302 from the auxiliary storage device 303. The primary storage device 302 is a memory such as a read only memory (ROM) and a random access memory (RAM). The auxiliary storage device 303 is, for example, a hard disk drive (HDD) or a memory card.

The display device 304 displays a state or the like of the router 10. The input device 305 receives an input from a user. The communication IF 306 is an interface to be connected to the networks 200a to 200c and the key management server device 20. Note that the router 10 does not have to include the display device 304 and the input device 305. When the router 10 does not include the display device 304 and the input device 305, for example, a display function and an input function of an external terminal connected via the communication IF 306 may be used.

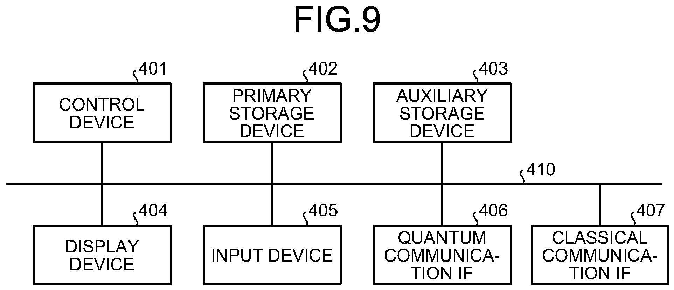

FIG. 9 is a diagram illustrating a hardware configuration example of the key management server device 20 of the first and second arrangements. The key management server device 20 of the first and second arrangements includes a control device 401, a primary storage device 402, an auxiliary storage device 403, a display device 404, an input device 405, a quantum communication IF 406, and a classical communication IF 407.

The control device 401, the primary storage device 402, the auxiliary storage device 403, the display device 404, the input device 405, the quantum communication IF 406, and the classical communication IF 407 are connected together via a bus 410.

The control device 401 executes a computer program read into the primary storage device 402 from the auxiliary storage device 403. The primary storage device 402 is a memory such as a ROM and a RAM. The auxiliary storage device 403 is, for example, an HDD or a memory card.

The display device 404 displays a state or the like of the key management server device 20. The input device 405 receives an input from a user. Note that the key management server device 20 does not have to include the display device 404 and the input device 405.

The quantum communication IF 406 is an interface to be connected to a cryptographic communication channel. The classical communication IF 407 is an interface to be connected to a control signal communication channel and the router 10.

The computer program executed by the router 10 and the key management server device 20 of the first and second arrangements is provided as a computer program product by being recorded in a computer-readable storage medium such as a CD-ROM, a memory card, a CD-R, and a digital versatile disc (DVD) in the form of an installable or executable file.

The computer program executed by the router 10 and the key management server device 20 of the first and second arrangements may also be stored in a computer connected to a network such as the Internet and may be provided by being downloaded via the network.

The computer program executed by the router 10 and the key management server device 20 of the first and second arrangements may also be provided via a network such as the Internet without being downloaded.

The computer program executed by the router 10 and the key management server device 20 of the first and second arrangements may also be provided by being previously incorporated in a ROM or the like.

The computer program executed by the router 10 of the first and second arrangements is configured by a module including a function achievable by the computer program within the function configuration of the router 10 of the first and second arrangements. The control device 301 reads and executes the computer program from a storage medium such as the auxiliary storage device 303 such that the function achieved by the computer program is loaded in the primary storage device 302. That is, the function achieved by the computer program is generated on the primary storage device 302.

Additionally, the computer program executed by the key management server device 20 of the first and second arrangements is configured by a module including a function achievable by the computer program within the function configuration of the key management server device 20 of the first and second arrangements. The control device 401 reads and executes the computer program from a storage medium such as the auxiliary storage device 403 such that the function achieved by the computer program is loaded in the primary storage device 402. That is, the function achieved by the computer program is generated on the primary storage device 402.

Note that the functions of the router 10 and the key management server device 20 of the first and second arrangements may be partially or wholly achieved by hardware such as an integrated circuit (IC). The IC is, for example, a processor that executes dedicated processing.

Moreover, when a plurality of processors are used to achieve the functions, each processor may achieve one of the functions or two or more of the functions.

While certain arrangements have been described, these arrangements have been presented by way of example only, and are not intended to limit the scope of the claims. Indeed, the novel systems described herein may be embodied in a variety of other forms; furthermore various omissions, substitutions and changes in the form of the systems described herein may be made provided that such variations fall within the scope of the appended claims.

## Claims

1. A communication system (100) comprising:
a key management server device (20a, 20b); and
a router (10a, 10b),
the key management server device (20a, 20b) comprising:
a key distribution processing module (21) configured to share a bit string by quantum key distribution;
a control signal processing module (23) configured to receive a control signal including key identification information and a key length, the key identification information identifying an encryption key generated from the bit string, and the key length indicating a length of the encryption key;
a decryption key generation module (26) configured to generate a decryption key corresponding to the encryption key; and
a supply module (25) configured to supply the decryption key to the router, and
the router (10a, 10b) comprising:
a packet reception processing module (11) configured to receive a packet encrypted with the encryption key; and
a decryption processing module (17) configured to decrypt the packet by using the decryption key supplied from the key management server device without requesting the key management server device to generate the decryption key,
**characterized in that**
the decryption key generation module (26) is configured to generate, upon receiving the control signal, the decryption key from the bit string based on the key identification information and the key length, without waiting for a request to generate the decryption key from the router.

2. The communication system (100) according to claim 1, wherein
the control signal further includes offset information indicating where to extract the decryption key from the bit string, and
the decryption key generation module (26) generates the decryption key based on the offset information.

3. The communication system (100) according to claim 1 or 2, wherein
the communication system comprises a plurality of the routers (10a, 10b),
the control signal further includes router identification information identifying a router to be supplied with the decryption key among the plurality of routers, and
the supply module (25) supplies the decryption key to the router identified by the router identification information.

4. The communication system (100) according to any one of claims 1 to 3, wherein
the router further comprises a storage control module (14) configured to store a plurality of the decryption keys in a storage (15) in an order that the decryption keys are generated by the decryption key generation module (26), and
the storage control module (15) reads the decryption key specified from the decryption processing module (17), inputs the specified decryption key to the decryption processing module (17), and deletes a decryption key stored in the storage (15) before the specified decryption key is stored.

5. The communication system (100) according to claim 4, wherein
in decrypting the packet, the decryption processing module (17) waits for a predetermined time and requests the storage control module to read the decryption key when the decryption key for decrypting the packet has not been supplied from the key management server device.

6. The communication system (100) according to claim 5, wherein
the decryption processing module (17) discards the packet without decrypting the packet when the decryption key is not able to be acquired even after a predetermined number of requests for the storage control module to read the decryption key.

7. The communication system (100) according to claim 4, wherein
in decrypting the packet, the decryption processing module (17) waits for a notification from the storage control module for a predetermined time when the decryption key for decrypting the packet has not been supplied from the key management server device, and discards the packet without decrypting the packet when receiving no notification even after passage of the predetermined time.

8. A communication system (100-2) comprising:
a plurality of key management server devices (20a, 20b, 20c, 20d) ; and
a router (10a, 10b),
one of the key management server devices (20a, 20b, 20c, 20d) comprising:
a key distribution processing module (21) configured to share a bit string with another facing key management server device (20a, 20b, 20c, 20d) by quantum key distribution;
a control signal processing module (23) configured to encrypt a decryption key by using the shared bit string and transmit a control signal including the encrypted decryption key and key identification information identifying the decryption key to the facing key management server device; and
a supply module (25) configured to supply the decryption key to the router , and
the router (10a, 10b) comprising:
a packet reception processing module (11) configured to receive a packet encrypted with an encryption key corresponding to the decryption key identified by the key identification information; and
a decryption processing module (17) configured to decrypt the packet by using the decryption key supplied from the one key management server device (20a, 20b, 20c, 20d) without requesting the one key management server device to generate the decryption key,
**characterized in that**
the supply module (25) is configured to supply the decryption key to the router upon receiving the control signal without waiting for a request to generate the decryption key from the router (10a, 10b) when the one key management server device (20a, 20b, 20c, 20d) is connected to the router (10a, 10b).

9. A key management server device (20a, 20b) comprising:
a key distribution processing module (21) configured to share a bit string by quantum key distribution;
a control signal processing module (23) configured to receive a control signal including key identification information and a key length, the key identification information identifying an encryption key generated from the bit string, and the key length indicating a length of the encryption key; and
a decryption key generation module (26) configured to generate a decryption key corresponding to the encryption key,
**characterized in that**
the decryption key generation module (26) is configured to generate, upon receiving the control signal, the decryption key from the bit string based on the key identification information and the key length, without waiting for a request to generate the decryption key from a router (10a, 10b).

10. A computer-readable medium comprising instructions which, when executed by a computer, cause the computer to perform:
sharing a bit string by quantum key distribution;
receiving a control signal including key identification information and a key length, the key identification information identifying an encryption key generated from the bit string, and the key length indicating a length of the encryption key; and
generating a decryption key corresponding to the encryption key,
**characterized in that**,
upon receiving the control signal, the decryption key is generated from the bit string based on the key identification information and the key length, without waiting for a request to generate the decryption key from a router (10a, 10b).

## Patentansprüche

1. Kommunikationssystem (100), Folgendes umfassend:
eine Schlüsselverwaltungsservervorrichtung (20a, 20b); und
einen Router (10a, 10b),
wobei die Schlüsselverwaltungsservervorrichtung (20a, 20b) Folgendes umfasst:
ein Schlüsselverteilungs-Verarbeitungsmodul (21), das zum Teilen einer Bitkette durch Quantenschlüsselverteilung konfiguriert ist;
ein Steuersignal-Verarbeitungsmodul (23), das zum Empfangen eines Steuersignals konfiguriert ist, das Schlüssel-Identifikationsinformationen und eine Schlüssellänge einschließt, wobei die Schlüssel-Identifikationsinformationen einen aus der Bitkette erzeugten Verschlüsselungsschlüssel identifizieren, und die Schlüssellänge eine Länge des Verschlüsselungsschlüssels angibt;
ein Entschlüsselungsschlüssel-Erzeugungsmodul (26), das zum Erzeugen eines dem Verschlüsselungsschlüssel entsprechenden Entschlüsselungsschlüssels konfiguriert ist; und
ein Zuführungsmodul (25), das zum Zuführen des Entschlüsselungsschlüssels an den Router konfiguriert ist, und
wobei der Router (10a, 10b) Folgendes umfasst:
ein Paketempfangs-Verarbeitungsmodul (11) das zum Empfangen eines mit dem Verschlüsselungsschlüssel verschlüsselten Pakets konfiguriert ist; und
ein Entschlüsselungs-Verarbeitungsmodul (17), das zum Entschlüsseln des Pakets durch Verwenden des von der Schlüsselverwaltungsservervorrichtung zugeführten Entschlüsselungsschlüssels konfiguriert ist, ohne die Schlüsselverwaltungsservervorrichtung aufzufordern, den Entschlüsselungsschlüssel zu erzeugen,
**dadurch gekennzeichnet, dass**
das Entschlüsselungsschlüssel-Erzeugungsmodul (26) zum Erzeugen des Entschlüsselungsschlüssels aus der Bitkette auf der Grundlage der Schlüssel-Identifikationsinformationen und der Schlüssellänge beim Empfangen des Steuersignals konfiguriert ist, ohne auf eine Aufforderung zum Erzeugen des Entschlüsselungsschlüssels von dem Router zu warten.

2. Kommunikationssystem (100) nach Anspruch 1, wobei
das Steuersignal ferner Offset-Informationen einschließt, die angeben, an welcher Stelle der Entschlüsselungsschlüssel aus der Bitkette zu extrahieren ist, und
das Entschlüsselungsschlüssel-Erzeugungsmodul (26) den Entschlüsselungsschlüssel auf der Grundlage der Offset-Informationen erzeugt.

3. Kommunikationssystem (100) nach Anspruch 1 oder 2, wobei
das Kommunikationssystem eine Vielzahl der Router (10a, 10b) umfasst,
das Steuersignal ferner Router-Identifikationsinformationen einschließt, die einen Router identifizieren, dem der Entschlüsselungsschlüssel aus der Vielzahl von Routern zuzuführen ist, und
das Zuführungsmodul (25) den Entschlüsselungsschlüssel dem durch die Router-Identifikationsinformationen identifizierten Router zuführt.

4. Kommunikationssystem (100) nach einem der Ansprüche 1 bis 3, wobei
der Router ferner ein Speichersteuerungsmodul (14) umfasst, das so konfiguriert ist, dass es eine Vielzahl der Entschlüsselungsschlüssel in einem Speicher (15) in einer Reihenfolge speichert, in der die Entschlüsselungsschlüssel von dem Entschlüsselungsschlüssel-Erzeugungsmodul (26) erzeugt werden, und
das Speichersteuerungsmodul (15) den von dem Entschlüsselungs-Verarbeitungsmodul (17) spezifizierten Entschlüsselungsschlüssel liest, den spezifizierten Entschlüsselungsschlüssel in das Entschlüsselungs-Verarbeitungsmodul (17) eingibt, und einen in dem Speicher (15) gespeicherten Entschlüsselungsschlüssel löscht, bevor der spezifizierte Entschlüsselungsschlüssel gespeichert wird.

5. Kommunikationssystem (100) nach Anspruch 4, wobei
beim Entschlüsseln des Pakets das Entschlüsselungs-Verarbeitungsmodul (17) eine vorbestimmte Zeit wartet und das Speichersteuerungsmodul auffordert, den Entschlüsselungsschlüssel zu lesen, wenn der Entschlüsselungsschlüssel zum Entschlüsseln des Pakets nicht von der Schlüsselverwaltungsservervorrichtung zugeführt worden ist.

6. Kommunikationssystem (100) nach Anspruch 5, wobei
das Entschlüsselungs-Verarbeitungsmodul (17) das Paket verwirft, ohne das Paket zu entschlüsseln, wenn der Entschlüsselungsschlüssel auch nach einer vorbestimmten Anzahl von Aufforderungen an das Speichersteuerungsmodul, den Entschlüsselungsschlüssel zu lesen, nicht erfasst werden kann.

7. Kommunikationssystem (100) nach Anspruch 4, wobei
beim Entschlüsseln des Pakets das Entschlüsselungs-Verarbeitungsmodul (17) eine vorbestimmte Zeit lang auf eine Benachrichtigung von dem Speichersteuerungsmodul wartet, wenn der Entschlüsselungsschlüssel zum Entschlüsseln des Pakets nicht von der Schlüsselverwaltungs-Servervorrichtung zugeführt worden ist, und das Paket verwirft, ohne das Paket zu entschlüsseln, wenn es auch nach Ablauf der vorbestimmten Zeit keine Benachrichtigung empfängt.

8. Kommunikationssystem (100-2), Folgendes umfassend:
eine Vielzahl von Schlüsselverwaltungsservervorrichtungen (20a, 20b, 20c, 20d); und
einen Router (10a, 10b),
wobei eine der Schlüsselverwaltungsservervorrichtungen (20a, 20b, 20c, 20d) Folgendes umfasst:
ein Schlüsselverteilungs-Verarbeitungsmodul (21), das zum Teilen einer Bitkette mit einer anderen gegenüberliegenden Schlüsselverwaltungs-Servervorrichtung (20a, 20b, 20c, 20d) durch Quantenschlüsselverteilung konfiguriert ist;
ein Steuersignal-Verarbeitungsmodul (23), das so konfiguriert ist, dass es einen Entschlüsselungsschlüssel durch Verwenden der gemeinsam genutzten Bitkette verschlüsselt und ein Steuersignal, das den verschlüsselten Entschlüsselungsschlüssel und Schlüsselidentifikationsinformationen, die den Entschlüsselungsschlüssel identifizieren, einschließt, an die gegenüberliegende Schlüsselverwaltungsservervorrichtung überträgt; und
ein Zuführungsmodul (25), das zum Zuführen des Entschlüsselungsschlüssels an den Router konfiguriert ist, und
wobei der Router (10a, 10b) Folgendes umfasst:
ein Paketempfangs-Verarbeitungsmodul (11), das zum Empfangen eines Pakets konfiguriert ist, das mit einem Verschlüsselungsschlüssel verschlüsselt ist, der dem durch die Schlüsselidentifikationsinformationen identifizierten Entschlüsselungsschlüssel entspricht; und
ein Entschlüsselungs-Verarbeitungsmodul (17), das zum Entschlüsseln des Pakets durch Verwenden des von der einen Schlüsselverwaltungsservervorrichtung (20a, 20b, 20c, 20d) zugeführten Entschlüsselungsschlüssels konfiguriert ist, ohne die eine Schlüsselverwaltungsservervorrichtung aufzufordern, den Entschlüsselungsschlüssel zu erzeugen,
**dadurch gekennzeichnet, dass**
das Zuführungsmodul (25) zum Zuführen des Entschlüsselungsschlüssels an den Router beim Empfangen des Steuersignals konfiguriert ist, ohne auf eine Aufforderung zum Erzeugen des Entschlüsselungsschlüssels von dem Router (10a, 10b) zu warten, wenn die eine Schlüsselverwaltungsservervorrichtung (20a, 20b, 20c, 20d) mit dem Router (10a, 10b) verbunden ist.

9. Schlüsselverwaltungsservervorrichtung (20a, 20b), Folgendes umfassend:
ein Schlüsselverteilungs-Verarbeitungsmodul (21), das zum Teilen einer Bitkette durch Quantenschlüsselverteilung konfiguriert ist;
ein Steuersignal-Verarbeitungsmodul (23), das zum Empfangen eines Steuersignals konfiguriert ist, das Schlüssel-Identifikationsinformationen und eine Schlüssellänge einschließt, wobei die Schlüssel-Identifikationsinformationen einen aus der Bitkette erzeugten Verschlüsselungsschlüssel identifizieren, und die Schlüssellänge eine Länge des Verschlüsselungsschlüssels angibt; und
ein Entschlüsselungsschlüssel-Erzeugungsmodul (26), das zum Erzeugen eines dem Verschlüsselungsschlüssel entsprechenden Entschlüsselungsschlüssels konfiguriert ist,
**dadurch gekennzeichnet, dass**
das Entschlüsselungsschlüssel-Erzeugungsmodul (26) zum Erzeugen des Entschlüsselungsschlüssels aus der Bitkette auf der Grundlage der Schlüssel-Identifikationsinformationen und der Schlüssellänge beim Empfangen des Steuersignals konfiguriert ist, ohne auf eine Aufforderung zum Erzeugen des Entschlüsselungsschlüssels von einem Router (10a, 10b) zu warten.

10. Computerlesbares Medium, umfassend Anweisungen, welche, wenn sie durch einen Computer ausgeführt werden, den Computer zum Durchführen der folgenden Schritte veranlassen:
Teilen einer Bitkette durch Quantenschlüsselverteilung;
Empfangen eines Steuersignals, das Schlüsselidentifikationsinformationen und eine Schlüssellänge einschließt, wobei die Schlüsselidentifikationsinformationen einen aus der Bitkette erzeugten Verschlüsselungsschlüssel identifizieren, und die Schlüssellänge eine Länge des Verschlüsselungsschlüssels angibt; und
Erzeugen eines Entschlüsselungsschlüssels, der dem Verschlüsselungsschlüssel entspricht,
**dadurch gekennzeichnet, dass**
beim Empfangen des Steuersignals, der Entschlüsselungsschlüssel aus der Bitkette auf der Grundlage der Schlüsselidentifikationsinformationen und der Schlüssellänge erzeugt wird, ohne auf eine Aufforderung zum Erzeugen des Entschlüsselungsschlüssels von einem Router (10a, 10b) zu warten.

## Revendications

1. Système de communication (100) comprenant :
un dispositif serveur de gestion de clés (20a, 20b) ; et
un routeur (10a, 10b),
le dispositif serveur de gestion de clés (20a, 20b) comprenant :
un module de traitement de distribution de clés (21) configuré pour partager une chaîne de bits par distribution quantique de clés ;
un module de traitement de signaux de commande (23) configuré pour recevoir un signal de commande incluant des informations d'identification de clé et une longueur de clé, les informations d'identification de clé identifiant une clé de chiffrage générée à partir de la chaîne de bits, et la longueur de clé indiquant une longueur de clé de chiffrage ;
un module de génération de clé de déchiffrage (26) configuré pour générer une clé de déchiffrage correspondant à la clé de chiffrage ; et
un module de fourniture (25) configuré pour fournir la clé de déchiffrage au routeur, et
le routeur (10a, 10b) comprenant :
un module de traitement de réception de paquet (11) configuré pour recevoir un paquet chiffré avec la clé de chiffrage ; et
un module de traitement de déchiffrage (17) configuré pour déchiffrer le paquet en utilisant la clé de déchiffrage fournie par le dispositif serveur de gestion de clés sans demander au dispositif serveur de gestion de clés de générer la clé de déchiffrage,
**caractérisé en ce que**
le module de génération de clé de déchiffrage (26) est configuré pour générer, sur la réception du signal de commande, la clé de déchiffrage à partir de la chaîne de bits sur la base des informations d'identification de clé et de la longueur de clé, sans attendre une demande de génération de la clé de déchiffrage à partir du routeur.

2. Système de communication (100) selon la revendication 1, dans lequel
le signal de commande inclut en outre des informations de décalage indiquant où extraire la clé de déchiffrage de la chaîne de bits, et
le module de génération de clé de déchiffrage (26) génère la clé de déchiffrage sur la base des informations de décalage.

3. Système de communication (100) selon la revendication 1 ou 2, dans lequel
le système de communication comprend une pluralité des routeurs (10a, 10b),
le signal de commande inclut en outre des informations d'identification de routeur identifiant un routeur à qui doit être fourni la clé de déchiffrage parmi la pluralité de routeurs, et
le module de fourniture (25) fournit la clé de déchiffrage au routeur identifié par les informations d'identification de routeur.

4. Système de communication (100) selon l'une quelconque des revendications 1 à 3, dans lequel
le routeur comprend en outre un module de commande de stockage (14) configuré pour stocker une pluralité des clés de déchiffrage dans un stockage (15) dans un ordre dans lequel les clés de déchiffrage sont générées par le module de génération de clé de déchiffrage (26), et
le module de commande de stockage (15) lit la clé de déchiffrage spécifiée à partir du module de traitement de déchiffrage (17), introduit la clé de déchiffrage spécifiée dans le module de traitement de déchiffrage (17) et supprime une clé de déchiffrage stockée dans le stockage (15) avant que la clé de déchiffrage spécifiée ne soit stockée.

5. Système de communication (100) selon la revendication 4, dans lequel
lors du déchiffrage du paquet, le module de traitement de déchiffrage (17) attend pendant une durée prédéterminée et demande au module de commande de stockage de lire la clé de déchiffrage lorsque la clé de déchiffrage pour le déchiffrage du paquet n'a pas été fournie par le dispositif serveur de gestion de clés.

6. Système de communication (100) selon la revendication 5, dans lequel
le module de traitement de déchiffrage (17) rejette le paquet sans déchiffrer le paquet lorsque la clé de déchiffrage ne peut être acquise même après un nombre prédéterminé de demandes de lecture de la clé de déchiffrage par le module de commande de stockage.

7. Système de communication (100) selon la revendication 4, dans lequel
lors du déchiffrage du paquet, le module de traitement de déchiffrage (17) attend une notification du module de commande de stockage pendant une durée prédéterminée lorsque la clé de déchiffrage pour le déchiffrage du paquet n'a pas été fournie à partir du dispositif serveur de gestion de clés, et rejette le paquet sans déchiffrer le paquet lorsqu'il ne reçoit aucune notification même après l'écoulement de la durée prédéterminée.

8. Système de communication (100-2) comprenant :
une pluralité de dispositifs serveurs de gestion de clés (20a, 20b, 20c, 20d) ; et
un routeur (10a, 10b),
l'un des dispositifs serveurs de gestion de clés (20a, 20b, 20c, 20d) comprenant :
un module de traitement de distribution de clés (21) configuré pour partager une chaîne de bits avec un autre dispositif serveur de gestion de clés (20a, 20b, 20c, 20d) en regard par distribution quantique de clés ;
un module de traitement de signaux de commande (23) configuré pour chiffrer une clé de déchiffrage en utilisant la chaîne de bits partagée et transmettre un signal de commande incluant la clé de déchiffrage chiffrée et des informations d'identification de clé identifiant la clé de déchiffrage au dispositif serveur de gestion de clés en regard ; et
un module de fourniture (25) configuré pour fournir la clé de déchiffrage au routeur, et
le routeur (10a, 10b) comprenant :
un module de traitement de réception de paquet (11) configuré pour recevoir un paquet chiffré avec une clé de chiffrage correspondant à la clé de déchiffrage identifiée par les informations d'identification de clé ; et
un module de traitement de déchiffrage (17) configuré pour déchiffrer le paquet en utilisant la clé de déchiffrage fournie à partir de l'un dispositif serveur de gestion de clés (20a, 20b, 20c, 20d) sans demander au dispositif serveur de gestion de clés de générer la clé de déchiffrage,
**caractérisé en ce que**
le module de fourniture (25) est configuré pour fournir la clé de déchiffrage au routeur sur réception du signal de commande sans attendre une demande de génération de la clé de déchiffrage à partir du routeur (10a, 10b) lorsque ledispositif serveur de gestion de clés (20a, 20b, 20c, 20d) est connecté au routeur (10a, 10b).

9. Dispositif serveur de gestion de clés (20a, 20b) comprenant :
un module de traitement de distribution de clés (21) configuré pour partager une chaîne de bits par distribution quantique de clés ;
un module de traitement de signaux de commande (23) configuré pour recevoir un signal de commande incluant des informations d'identification de clé et une longueur de clé, les informations d'identification de clé identifiant une clé de chiffrage générée à partir de la chaîne de bits, et la longueur de clé indiquant une longueur de la clé de chiffrage ; et
un module de génération de clé de déchiffrage (26) configuré pour générer une clé de déchiffrage correspondant à la clé de chiffrage,
**caractérisé en ce que**
le module de génération de clé de déchiffrage (26) est configuré pour générer, sur réception du signal de commande, la clé de déchiffrage à partir de la chaîne de bits sur la base des informations d'identification de clé et de la longueur de clé, sans attendre une demande de génération de la clé de déchiffrage à partir d'un routeur (10a, 10b).

10. Support lisible par ordinateur comprenant des instructions qui, lorsqu'elles sont exécutées par un ordinateur, amènent l'ordinateur à effectuer des opérations consistant à :
partager une chaîne de bits par distribution quantique de clés ;
recevoir un signal de commande incluant des informations d'identification de clé et une longueur de clé, les informations d'identification de clé identifiant une clé de chiffrage générée à partir de la chaîne de bits, et la longueur de clé indiquant une longueur de la clé de chiffrage ; et
générer une clé de déchiffrage correspondant à la clé de chiffrage,
**caractérisé en ce que**,
sur réception du signal de commande, la clé de déchiffrage est générée à partir de la chaîne de bits sur la base des informations d'identification de clé et de la longueur de clé, sans attendre une demande de génération de la clé de déchiffrage à partir d'un routeur (10a, 10b).
